Europäisches Patentamt

European Patent Office

Office européen des brevets

(19)

(11) Veröffentlichungsnummer: **0 212 143**
A2

# (12) EUROPÄISCHE PATENTANMELDUNG

(21) Anmeldenummer: 86108691.6

(22) Anmeldetag: 25.06.86

(51) Int. Cl.⁴: **F 16 F 13/00,** F 16 C 3/02

(30) Priorität: 06.08.85 DE 3528158

(43) Veröffentlichungstag der Anmeldung: 04.03.87
**Patentblatt 87/10**

(84) Benannte Vertragsstaaten: **DE FR GB IT SE**

(71) Anmelder: **Continental Gummi-Werke Aktiengesellschaft, Königsworther Platz 1 Postfach 169, D-3000 Hannover 1 (DE)**

(72) Erfinder: **Bebermeier, Jürgen, Limmerstrasse 15A, D-3000 Hannover 91 (DE)**

(54) **Membran.**

(57) Elastische Motorlager sind vielfach mit einer Dämpfungseinrichtung in Form zweier mit einer Dämpfungsflüssigkeit gefüllter und abhängig von den Federbewegungen der elastischen Lagerelemente wechselweise volumenveränderlicher Kammern versehen, wobei die Dämpfungswirkung aus dem gedrosselten Überströmen der aus einer Kammer in die andere verdrängten Flüssigkeit hergeleitet wird. Die als Trennwand zwischen den beiden Kammern dienende Membran ist zwecks akustischen Abkoppelns der Dämpfung nach bekannten Vorschlägen mit einem Freiweg eingespannt. Erfindungsgemäß wird dieser Freiweg in die Membran selbst verlegt, indem sie mit einem über eine dünne Verbindungswand mit dem Außenrand zusammenhängenden vergleichweise steifen Mittelteil und auf beiden Seiten an die Verbindungswand angeformten, die Auslenkbewegungen des letzteren begrenzenden Noppen, Stiften, od. dgl. ausgestattet wird.

Continental Gummi-Werke Aktiengesellschaft, 3000 Hannover

## Membran

Die Erfindung bezieht sich auf aus Gummi oder gummiähnlichen Kunststoffen mit oder ohne Verstärkungseinlagen hergestellte biegsame Membranen, insbesondere Entkoppelungsmembranen für hydraulisch gedämpfte elastische Lager.

Die Motorlager in Kraftfahrzeugen und auch andere elastische Lagerungssysteme enthalten nach bekannten Vorschlägen in der zugeordneten Dämpfungseinrichtung zwei mit einer Dämpfungsflüssigkeit gefüllte und durch eine biegsame, häufig auch mit Axialspiel beweglich eingespannte Membran, die sogenannte Entkoppelungsmembran voneinander getrennte Kammern. Im Hinblick auf die Bedeutung ihrer Funktion für das Schwingungsverhalten und die erwünschte akustische Isolierung der Lager haben sich vergleichsweise aufwendige Konstruktionen sowohl der Entkoppelungsmembran selbst als auch der zugehörigen Elemente wie Freiweg-Einrichtungen und Überströmdrosseln als notwendig erwiesen. Die hohen Genauigkeitsanforderungen an die Beschaffenheit jeweils mehrerer Formteile innerhalb enger Maßtoleranzen zwangen zur bevorzugten Anwendung des Präzisionsdruckgießens und anderer teurer Fertigungsverfahren, wodurch die Gesamtkosten für die Herstellung der Lager schon von vornherein unverhältnismäßig angehoben wurden.

Es ist demgegenüber die Aufgabe der Erfindung, durch eine neuartige Gestaltung der Entkoppelungsmembran konstruktive Vereinfachungen der Dämpfungseinrichtung elastischer Lager zu ermöglichen und als Folge davon die Fertigungskosten im ganzen zu senken. Zum Lösen dieser Aufgabe ist für Membranen der eingangs genannten Art gemäß der Erfindung vorgesehen, daß sie einen kreisförmigen Flächenbereich von im Vergleich zu den in Radialrichtung angrenzenden Mitten- und Randbereichen wesentlich verminderter Wandstärke mit in Axialrichtung angeformten und über den Umfang der Kreisringfläche mit gegenseitigen Abständen verteilten prisma- oder säulenartigen, vorzugsweise zylindrischen Körpern aufweisen. Zweckmäßig verläuft der kreisringförmige Flächenbereich in der waagerechten Mittenebene der Membran und weist auf beiden Seiten angeformte Körper auf, in welchem Falle diese beiderseits des kreisförmigen Flächenbereiches in jeweils gegenständiger Ausrichtung angeformt sind. Nach weiteren Teilmerkmalen der Erfindung ist der Bogenabstand zwischen benachbarten Körpern um ein Vielfaches größer als ihr Abstand von den Mitten- und Randbereichen der Membran und die Höhe der Körper im wesentlichen der der Mitten- und Randbereiche entsprechend bemessen.

Die Erfindung führt zu einer Membran mit einem durch beiderseits tiefgehende Ringnuten funktional gegen den Außenrand abgehobenen und infolge der nur hautartig dünnen Verbindungswand im Nutengrund relativ zu ihm beweglichen Mittenteil, wobei dessen Bewegungsspielraum aber wieder von den auf der Verbindungswand in Gestalt von Zapfen oder Nocken angeformten Körpern begrenzt wird. Denn mit jedem Auslenken des Mittenteiles stellen sich die Körper zunehmend schräg gegen die Axialrichtung, bis sie wechselweise an der Ober- und der Unterseite der Membran an die auf der einen Seite äußere und auf der anderen Seite die innere Randbegrenzung der Ringnuten anstoßen und damit die weitere Bewegung des Mittenteiles unterbrechen. Man hat es dabei in der Hand, durch zweckentsprechendes Bemessen der Körper, in erster Linie ihrer Höhe und ihres Abstandes von den Nutenrändern, einen genau bestimmten Bewegungsspielraum vorzusehen.

Die neuartigen Entkoppelungsmembranen sind gleichsam mit einem schon vorab eingebauten Freiweg ausgestattet. Für ihren Einsatz zum akustischen Abkoppeln in Dämpfungseinrichtungen elastischer Lager benötigen sie daher keine besonderen Aufwendungen, sondern sie können kostensparend in einfacher herkömmlicher Weise fest eingespannt werden. Da alle sonst kritischen und engtolerierten Maße in einem einzigen leicht herstellbaren Gummi-Formteil vereinigt sind, entfällt die Notwendigkeit zum Anwenden teurer Präzisionsverfahren. Die mit den neuartigen Membranen ausgerüsteten Lagersysteme sind infolgedessen bei einer den bekannten Lagern mindestens gleichwertigen Funktionssicherheit und Zuverlässigkeit beträchtlich kostengünstiger herzustellen.

Zum Verdeutlichen der Erfindung sind verschiedene Ausführungsbeispiele in der Zeichnung schematisch dargestellt. Es zeigen:

Fig. 1   einen Schnitt durch eine neuartige Entkoppelungsmembran im Ruhezustand nach dem Linienzug I+I in Fig. 2;

Fig. 2   eine Draufsicht auf einen Teilabschnitt der Membran nach Fig. 1;

Fig. 3   einen Teilabschnitt der Membran nach Fig. 1 im blockierten ausgelenkten Zustand und

Fig. 4   und 5 Teilansichten zweier Varianten der Erfindung in Draufsichtdarstellung.

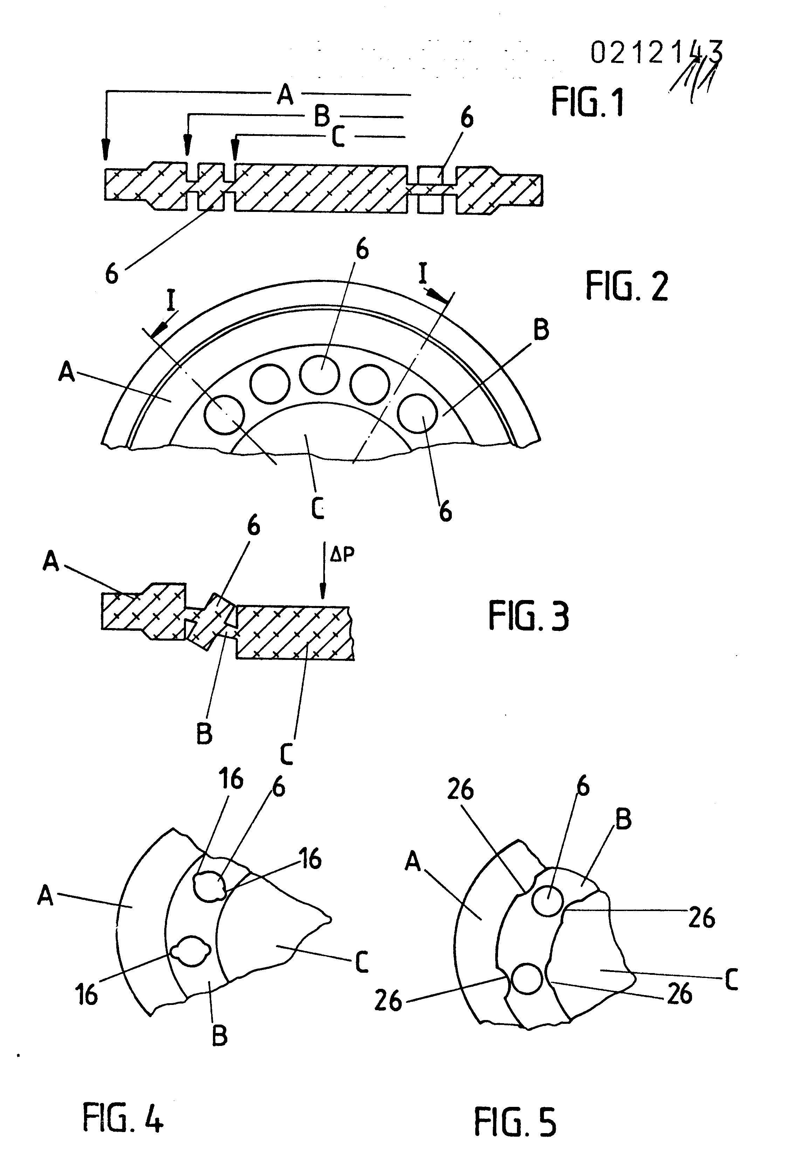

Die in Fig. 1 bis 3 gezeichnete Membran ist das Entkoppelungselement in der Dämpfungseinrichtung beispielsweise eines Motorlagers an sich bekannter beliebiger Konstruktion. Sie ist aus einem synthetischen Kautschuk ohne Verstärkungseinlagen hergestellt und funktionsmäßig in drei konzentrisch untereinander zusammenhängende Kreis- bzw. Kreisringzonen gegliedert: Eine zum Einspannen in das nicht weiter dargestellte Lagergehäuse dienende äußere Randzone A, eine axial gegen diese bewegliche innere Zone C und eine die beiden Zonen A und C miteinander verbindende mittlere Biegezone B. Während die Rand- und die innere Zone A und C verhältnismäßig dickwandig und praktisch unverformbar ausgeführt sind, bildet die demgegenüber filmartig dünnwandige Biegezone B den eigentlichen Verformungsteil der Membran, der alle Ausweichbewegungen der inneren Zone C nach beiden Richtungen als Folge von Druckdifferenzen in den durch die Membran gegeneinander abgetrennten Kammern der Dämpfungseinrichtung ermöglicht.

Gemäß der Erfindung sind an die Biegehaut der mittleren Kreisringzone B mit gegenseitigen Bogenabständen über ihren Umfang verteilte zylinderförmige Noppen 6 angeformt. Die Noppen sind jeweils beiderseits der Biegehaut durchlaufend mit einer etwa der Schichtstärke der benachbarten Zonen A und C entsprechenden axialen Länge und einem die radiale Breite der Zone B nur geringfügig unterschreitenden Durchmesser ausgebildet, während dagegen ihre Abstände etwa in einer ihrem Durchmesser entsprechenden Größenordnung bemessen sein können. Ihr Einfluß auf die Membranbewegungen ist in Fig. 3 veranschaulicht: Unter der Wirkung einer Druckdifferenz $\Delta P$ auf einer Seite weicht die innere Zone C zunächst ungehindert aus, bis die von der tragenden Biegehaut der mittleren Zone B schräggestellten Noppen 6 sich zwischen den zugekehrten Wandungen der Zonen A und C verkeilen und damit die weitere Membranbewegung blockieren. Nach Erreichen dieser Phase können sich Druckunterschiede in bekannter Weise nur noch durch gedrosseltes Verschieben der Dämpfungsflüssigkeit zwischen den Kammern der Dämpfungseinrichtung über die hierfür vorgesehene Überstrombohrung ausgleichen. Der verfügbare Freiweg kann in jedem Falle durch zweckentsprechendes Bemessen der Noppen 6, und zwar ihrer axialen Länge und ihres Durchmessers, vorab festgelegt werden.

Ein weiches, progressives Abbremsen der Membranbewegung kann durch Ausbilden der Noppen 6 mit axial durchlaufenden seitlichen Rippen oder Wulsten 16 gemäß der Darstellung in Fig. 4 erreicht werden. Die gleiche Wirkung ergibt sich mit der in Fig. 5 gezeichneten Variante, wobei solche Rippen oder Wulste 26 an den jeweils den Noppen 6 zugekehrten Randflächen der benachbarten Zonen A und C vorgesehen sind.

## Patentansprüche:

1. Aus Gummi oder gummiähnlichen Kunststoffen mit oder ohne Verstärkungseinlagen hergestellte biegsame Membran, insbesondere Entkoppelungsmembran für hydraulisch gedämpfte elastische Lager, dadurch gekennzeichnet, daß sie einen kreisringförmigen Flächenbereich (B) von im Vergleich zu den in Radialrichtung angrenzenden Mitten- und Randbereichen (C, A) wesentlich verminderter Wandstärke mit in Radialrichtung angeformten und über den Umfang der Kreisringfläche mit gegenseitigen Abständen verteilten prisma- oder säulenartigen Körpern (6) aufweist.

2. Membran nach Anspruch 1, dadurch gekennzeichnet, daß der kreisringförmige Flächenbereich (B) in ihrer waagerechten Mittenebene verläuft und auf beiden Seiten angeformte Körper (6) aufweist.

3. Membran nach Anspruch 2, dadurch gekennzeichnet, daß die Körper (6) beiderseits des kreisringförmigen Flächenbereiches (B) in jeweils gegenständiger Ausrichtung angeformt sind.

4. Membran nach den Ansprüchen 1 bis 3, dadurch gekennzeichnet, daß der Bogenabstand zwischen benachbarten Körpern (6) um ein Vielfaches größer als ihr Abstand von den Mitten- und Randbereichen (C, A) der Membran bemessen ist.

5. Membran nach den Ansprüchen 1 bis 4, dadurch gekennzeichnet, daß die Körper (6) in Form von Zylindern ausgebildet sind.

6. Membran nach den Ansprüchen 1 bis 5, dadurch gekennzeichnet, daß die Höhe der Körper (6) im wesentlichen der der Mitten- und Randbereiche (C, A) der Membran entsprechend bemessen ist.

7. Membran nach den Ansprüchen 1 bis 6, dadurch gekennzeichnet, daß die Körper (6) an ihren den angrenzenden Mitten- und Randbereichen (C, A) der Membran zugekehrten Oberflächen mit über ihre ganze Höhe durchlaufenden angeformten Axialrippen oder -wulsten (16) ausgebildet sind.

8. Membran nach den Ansprüchen 1 bis 6, dadurch gekennzeichnet, daß die Mitten- und Randbereiche (C, A) der Membran an ihren den Körpern (6) zugekehrten Oberflächenbereichen mit über ihre ganze Höhe in Axialrichtung durchlaufenden rippen- oder wulstartigen Auswölbungen (26) ausgebildet sind.

Hannover, den 29. Juli 1985
85-54 P/Sü          Sü/Lo

FIG.1

FIG. 2

FIG. 3

FIG. 4

FIG. 5